# EUROPEAN PATENT SPECIFICATION

(11) **EP 3 613 284 B1**
(45) Date of publication and mention of the grant of the patent: **16.08.2023**
(21) Application number: 18787375.7
(22) Date of filing: 20.04.2018
(51) Int. Cl.: A01M 7/00, A01M 3/00

(54) **METHOD AND PROJECTILE FOR COMBATING NESTS OF HARMFUL INSECTS**
VERFAHREN UND GESCHOSS ZUR BEKÄMPFUNG VON NESTERN SCHÄDLICHER INSEKTEN
PROCÉDÉ ET PROJECTILE POUR COMBATTRE DES NIDS D'INSECTES NUISIBLES

(30) Priority: 20.04.2017 ES 201730633; 29.09.2017 ES 201731167
(43) Date of publication of application: 26.02.2020
(73) Proprietor: Rodríquez García, Amadeo, 39012 Cueto (ES)
(72) Inventor: Rodríquez García, Amadeo, 39012 Cueto (ES)
(74) Representative: García Gómez, José Donato
(86) International application number: PCT/ES2018/070320
(87) International publication number: WO 2018/193146

(56) References cited:
- WO-A1-2017/050956
- CA-A1- 2 325 197
- CN-Y- 2 279 066
- FR-A1- 3 030 190
- FR-A1- 3 030 190
- US-A1- 2001 054 367
- US-B1- 6 772 694
- US-B2- 10 517 292

## Description

### Object of the invention

The object of the present invention is a method for combating harmful insects that has characteristics aimed at allowing the introduction of a pesticide into the nest by the firing of pesticide frozen projectiles, as well as a projectile to be used for this purpose.

### Technical field of the invention

This invention is applicable in the field dedicated to pest control of harmful insects inhabiting nests and especially, but not limited to, the Asian wasp *"vespa velutina".*

### State of the art

Currently various species of insects are known to live in nests built in outdoor areas and, often, in high places.

Some of these insects are harmful to the ecosystem, making the control and reduction of their population advisable. Specifically, the Asian *wasp "vespa velutina"* is spreading throughout Europe causing great harm to the bee population on which they feed, to the point of making them disappear in some areas.

With the presence of this wasp the bees do not dare to leave their nest preventing them from contributing to the pollination of flowers, which affects the ecosystem in a very negative way.

These wasp nests are currently being combated by spraying them with a flammable substance and their subsequent burning.

Another option is spraying of the nest with pesticides or biocides; this product must remain for a few days so that the greatest number of wasps are impregnated therewith, causing their death; and afterwards the nest is removed. Both options are possible when the nest is at a low height and it can be accessed.

When the nest is at a height that makes it impossible to access, long metal poles are used for the injection of pesticides there through, and once the colony has been eliminated, it is removed as in the previous case. For these cases, firing with a shotgun of shot cartridges has also been tried. This destroys the nest but does not get rid of most of the wasps which leave the nest once it has been destroyed.

In the national patent P200603051 of the same applicant a "pest control method", specially designed to combat the pine processionary moth caterpillars is described. In said method, a pesticide carrier element, which is a capsule of easily breakable and biodegradable material within which the pesticidal agent is placed, is fired. The shot is directed at the branches of the tree, trunk or soil, where the pest is located at the time of application. The capsule breaks on first impact causing the pesticidal agent to disperse, impregnating the area where the caterpillars are located and their surroundings. The caterpillars that have been contaminated by passing through the areas impregnated with pesticidal material spread this material with their movement; they die, and in turn, contaminate the rest of the colony.

This method is not applicable for eliminating the Asian wasp that can only be combated within its nest, it being necessary for the pesticide to be introduced inside the nest to eliminate the wasps, in particular the queen. In the case of the previous patent, the capsule breaks on contacting the outside and surroundings of the nest and the pesticide does not penetrate the interior.

Another problem with the use on the market of the method described in the previous patent is that its application requires tests, administrative permits and phytosanitary registration to ensure that the properties of the pesticide do not vary with the combination of the material from which the capsule is made, as well as that it is not harmful to the ecosystem, making these procedures extremely expensive to implement.

Therefore, the technical problem posed is the development of a method to combat nests of harmful insects, among others of the Asian wasp, that guarantees the introduction and release of pesticide in the interior of the nest that is usually found in high places. State of the art documents in this technical field are for example: CA 2 325 197 A1, US 6 772 694 B1, WO 2017/050956 A1, FR 3 030 190 A1.

### Description of the invention

The method for combating harmful insects, which is the object of the invention, has some peculiarities aimed at allowing the firing of a pesticide at the nest and at ensuring that said pesticide does not remain outside the nest, but penetrates into the latter and immediately begins to thaw, completely impregnating the inside of the nest after several shots, thus ensuring the extermination of the insect colony. This also guarantees the safety of the operator who can fire accurately from many metres away, without having to climb the tree or to the height where these nests are usually located, avoiding with this method injury to the operator from falls, bites of these insects or from electrocutions on contacting electrical cables that occur with the use of metal poles.

Another object of the invention is that said projectiles have an outer jacket of a solid material, with a predetermined calibre, and which is suitable for providing straight and non-erratic flight to the projectile.

In order to achieve these objects, the method of the invention comprises the following steps:
a) the provision of a mould with cavities shaped like a projectile,
b) the pouring into the mould cavities of a liquid pesticide suitable for the type of insects to be combated,
c) the freezing of the liquid pesticide poured into the mould cavities,
d) the removal of the frozen pesticide projectiles from the mould cavities,
e) the firing of the frozen pesticide projectiles into the interior of the nest, and
f) the distribution of the liquid pesticide inside the nest during the gradual thawing of the projectiles at room temperature.

In one embodiment of the invention, at least one of the mould cavities is constituted by a hollow jacket shaped like a projectile made of a solid and resistant material, having at least one open hole for the pouring of the liquid pesticide to be frozen in its interior; the jackets and the frozen liquid pesticide in its interior forming the projectiles to be fired.

It is envisaged that the firing of the pesticide frozen projectiles, with or without outer jacket, may be carried out, for example, with a compressed gas gun similar to tracer guns used in paintball games, which have a barrel of a determined section and whose pressure can be regulated so that the projectile penetrates the nest but does not pass through it, so that the projectile fired remains in the interior of the nest of insects to be combated.

In any case, the pesticide frozen projectiles, with or without outer jacket, will be made with dimensions, calibres and shapes suitable for the characteristics of the shotgun barrel or the device used for firing them.

Firstly, the use of these pesticide frozen projectiles allows their firing and their penetration, whether in their entirety or fragmented, in the interior of the nest, and the subsequent progressive distribution of the pesticide product inside the nest, as the projectile or fragments thereof are thawing.

The quantity and concentration of the pesticide product to be added to each projectile is that appropriate for each case, depending on the species to be eliminated. The projectile may consist of the pesticide product alone or a solution or a combination thereof with other substances or liquids suitable for its function.

Several shots can be fired so that several pesticide projectiles remain inside the nest.

Once the nest's colony has died, the nest can be taken down or left, as it is no longer dangerous.

In the case that the mould has at least one cavity constituted by a hollow jacket, the obtained projectiles comprise the hollow jacket externally in which a frozen liquid pesticide is housed.

Said hollow jacket shaped like a projectile is provided with at least one hole for the introduction of the liquid pesticide, into its interior, and the subsequent release of the liquid pesticide, once thawed, into the nest.

The outer jacket of the projectiles is made of a solid material, preferably biodegradable and non-polluting to the environment.

Said jacket has at least one cylindrical portion of a predetermined calibre, which is provided externally with helical ribs suitable to ensure the rotation of the projectile fired with a gun of suitable calibre and the flight of said projectile according to a straight and non-erratic trajectory.

The cylindrical portion of the jacket has an opening at its rear end, and it extends at its front end into a closed tip. Said rear opening forms the inlet hole for the liquid pesticide and the subsequent outlet thereof, once thawed.

### Description of the figures

In order to complement the description that is being carried out and with the purpose of facilitating the understanding of the features of the invention, the present description is accompanied by a set of drawings wherein, by way of a non-limiting example, the following has been represented:
- Figures 1a, 1b, 1c schematically show the steps of the method for combating harmful insect nests, according to the invention.
- Figure 2 shows a perspective view of one of the projectiles used in the method of the invention.

### Preferred embodiment of the invention

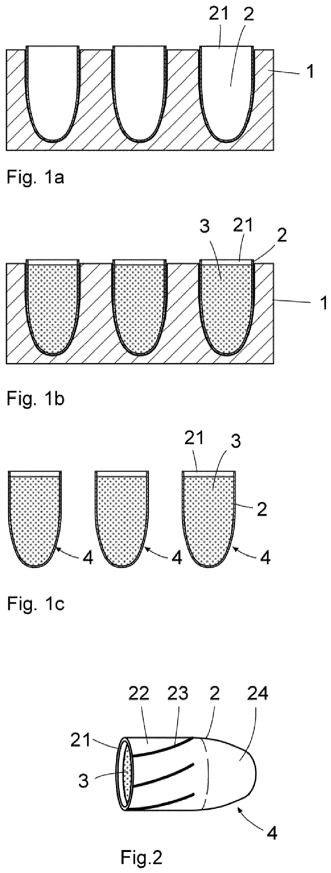

The method of the invention comprises the provision of a mould (1), depicted in Figure 1a, provided with cavities consisting of hollow jackets (2) shaped like a projectile and made of a solid and biodegradable material.

Said jackets (2) have an open hole (21) at a rear end for the pouring into their interior of a liquid pesticide (3) suitable for the type of insects to be combated.

The liquid pesticide (3) is, then frozen, thus the jackets (2) and the liquid pesticide (3) frozen in their interior forming projectiles (4).

These projectiles (4) with the liquid pesticide (3) frozen in their interior are fired, in this case with a compressed air gun with adjustable power, at the inside of the nest of insects to be combated, so that they penetrate and remain housed in the interior of the nest, and the liquid pesticide (3) is released inside said nest as it thaws.

Figure 2 shows one of the projectiles (4) formed by the jacket (2) and the frozen liquid pesticide (4) in its interior. The jacket (2) has a cylindrical portion (22) of a predetermined calibre, externally provided with helical ribs (23) that cause the projectile, fired with a shotgun of the appropriate calibre, to rotate.

The aforementioned cylindrical portion (22) is open at its rear end, which defines the inlet hole (21) and the subsequent release of the liquid pesticide, and it extends at its front end into a closed tip (24).

Once the nature of the invention as well as an example of preferred embodiment have been sufficiently described, it is stated for all pertinent purposes that the materials, form, size and arrangement of the elements described are susceptible to changes, provided these do not involve an alteration of the essential features of the invention that are claimed subsequently.

## Claims

1. A method for fighting harmful insects, comprising the use of a liquid pesticide (3), **characterised in that** it comprises:
a) the provision of a mould with cavities (1) shaped like a projectile,
b) the pouring into the mould cavities (1) of a liquid pesticide (3) suitable for the type of insects to be combated,
c) the freezing of the liquid pesticide (3) poured into the mould cavities (1),
d) the removal of the frozen pesticide projectiles from the mould cavities (1),
e) the firing of the frozen pesticide projectiles into the interior of the nest, and
f) the distribution of the liquid pesticide (3) inside the nest during the gradual thawing of the projectiles at room temperature.

2. The method according to claim 1, **characterised in that** at least one of the mould cavities (1) is constituted by a hollow jacket (2) shaped like a projectile and made of a solid and resistant material, which has at least one open hole (21) for the pouring of the liquid pesticide (3) to be frozen into its interior; the jackets (2) and the frozen liquid pesticide (3) in its interior forming the projectiles (4) to be fired.

3. A projectile (4) for combating nests of harmful insects **characterised in that** it comprises a frozen liquid pesticide (3).

4. The projectile (4) according to claim 3, **characterised in that** it comprises externally a hollow jacket (2), shaped like a projectile, made of a solid and resistant material, provided with at least one hole for the introduction of a liquid pesticide (3) into its interior and the subsequent outlet of the thawed liquid pesticide (3).

5. The projectile (4) according to claim 4, **characterised in that** the jacket (2) has a cylindrical portion (22) of a predetermined calibre, open at its rear end and which extends at its front end into a closed tip (24).

6. The projectile (4) according to claim 5, **characterised in that** the cylindrical portion (22) of the jacket externally has helical ribs (23) that cause the rotation of the projectile (4) fired with a gun of the appropriate calibre and the flight of said projectile (4) according to a straight trajectory.

## Patentansprüche

1. Verfahren zur Bekämpfung schädlicher Insekten, umfassend die Verwendung eines flüssigen Pestizids (3), **dadurch gekennzeichnet, dass** es Folgendes umfasst:
a) das Vorsehen einer Form mit Hohlräumen (1), die wie ein Geschoss geformt sind,
b) das Gießen eines flüssigen Pestizids (3), das für die Art der zu bekämpfenden Insekten geeignet ist, in die Formhohlräume (1),
c) das Einfrieren des in die Formhohlräume (1) gegossenen flüssigen Pestizids (3),
d) die Entnahme der gefrorenen Pestizidgeschosse aus den Formhohlräumen (1),
e) das Abfeuern der gefrorenen Pestizidgeschosse in das Innere des Nests, und
f) die Verteilung des flüssigen Pestizids (3) im Nest während des allmählichen Auftauens der Geschosse bei Raumtemperatur.

2. Verfahren nach Anspruch 1, **dadurch gekennzeichnet, dass** mindestens einer der Formhohlräume (1) von einem hohlen Mantel (2) gebildet wird, der wie ein Geschoss geformt und aus einem festen und widerstandsfähigen Material hergestellt ist, der mindestens ein offenes Loch (21) zum Gießen des flüssigen Pestizids (3), das gefroren werden soll, in sein Inneres aufweist; wobei die Mäntel (2) und das gefrorene flüssige Pestizid (3) in ihrem Inneren die abzufeuernden Geschosse (4) bilden.

3. Geschoss (4) zur Bekämpfung von Nestern schädlicher Insekten, **dadurch gekennzeichnet, dass** es ein gefrorenes flüssiges Pestizid (3) umfasst.

4. Geschoss (4) nach Anspruch 3, **dadurch gekennzeichnet, dass** es außen einen hohlen Mantel (2) umfasst, der wie ein Geschoss geformt ist und aus einem festen und widerstandsfähigen Material hergestellt ist, der mit mindestens einem Loch für die Eingabe eines flüssigen Pestizids (3) in sein Inneres und den anschließenden Auslass des aufgetauten flüssigen Pestizids (3) versehen ist.

5. Geschoss (4) nach Anspruch 4, **dadurch gekennzeichnet, dass** der Mantel (2) einen zylindrischen Abschnitt (22) eines vorbestimmten Kalibers aufweist, der an seinem hinteren Ende offen ist und sich an seinem vorderen Ende in eine geschlossene Spitze (24) erstreckt.

6. Geschoss (4) nach Anspruch 5, **dadurch gekennzeichnet, dass** der zylindrische Abschnitt (22) des Mantels außen schraubenförmige Rippen (23) aufweist, die die Drehung des mit einer Waffe des geeigneten Kalibers abgefeuerten Geschosses (4) und den Flug des Geschosses (4) gemäß einer geraden Bahn bewirken.

## Revendications

1. Procédé pour combattre les insectes nuisibles, comprenant l'utilisation d'un pesticide liquide (3), **caractérisé en ce qu'**il comprend :
a) la fourniture d'un moule avec des cavités (1) en forme de projectile,
b) la coulée dans les cavités (1) du moule d'un pesticide liquide (3) adapté au type d'insectes à combattre,
c) la congélation du pesticide liquide (3) versé dans les cavités du moule (1),
d) le retrait des projectiles de pesticides congelés des cavités du moule (1),
e) le tir des projectiles de pesticides congelés à l'intérieur du nid, et
f) la distribution du pesticide liquide (3) à l'intérieur du nid lors de la décongélation progressive des projectiles à température ambiante.

2. Procédé selon la revendication 1, **caractérisé en ce qu'**au moins l'une des cavités du moule (1) est constituée d'une enveloppe creuse (2) en forme de projectile et réalisée en un matériau solide et résistant, qui présente au moins un trou ouvert (21) pour la coulée du pesticide liquide (3) à congeler à l'intérieur ; les enveloppes (2) et le pesticide liquide congelé (3) à l'intérieur formant les projectiles (4) à tirer.

3. Projectile (4) pour combattre des nids d'insectes nuisibles, **caractérisé en ce qu'**il comprend un pesticide liquide congelé (3).

4. Projectile (4) selon la revendication 3, **caractérisé en ce qu'**il comprend extérieurement une enveloppe creuse (2), en forme de projectile, faite d'un matériau solide et résistant, munie d'au moins un trou pour l'introduction d'un pesticide liquide (3) à l'intérieur et la sortie ultérieure du pesticide liquide décongelé (3).

5. Projectile (4) selon la revendication 4, **caractérisé en ce que** l'enveloppe (2) présente une partie cylindrique (22) d'un calibre prédéterminé, ouverte à son extrémité arrière et qui se prolonge à son extrémité avant par une pointe fermée (24).

6. Projectile (4) selon la revendication 5, **caractérisé en ce que** la partie cylindrique (22) de l'enveloppe présente extérieurement des nervures hélicoïdales (23) qui provoquent la rotation du projectile (4) tiré avec une arme d'un calibre approprié et le vol dudit projectile (4) selon une trajectoire rectiligne.
